(19) Europäisches Patentamt
European Patent Office
Office européen des brevets

(11) **EP 0 791 812 B1**

(12) **FASCICULE DE BREVET EUROPEEN**

(45) Date de publication et mention
de la délivrance du brevet:
**09.07.2003 Bulletin 2003/28**

(51) Int Cl.⁷: **G01H 9/00**

(21) Numéro de dépôt: **97400346.9**

(22) Date de dépôt: **17.02.1997**

(54) **Capteur optique de vibrations**

Optischer Schwingungsfühler

Optical vibration sensor

(84) Etats contractants désignés:
**CH DE ES FR GB IT LI NL SE**

(30) Priorité: **22.02.1996 FR 9602196**

(43) Date de publication de la demande:
**27.08.1997 Bulletin 1997/35**

(73) Titulaire: **GEC ALSTHOM T & D BALTEAU**
**92120 Montrouge (FR)**

(72) Inventeur: **Chatrefou, Denis**
**91860 Epinay Sous Senart (FR)**

(74) Mandataire: **Gosse, Michel et al**
**ALSTOM**
**Intellectual Property Department**
**25,avenue Kléber**
**75116 Paris (FR)**

(56) Documents cités:
**EP-A- 0 354 882      GB-A- 2 185 106**
**US-A- 4 569 570**

## Description

La présente invention concerne un capteur optique de vibrations, et plus particulièrement, un capteur dans lequel on analyse une lumière réfléchie par un miroir solidaire d'un élément soumis aux vibrations dont on souhaite mesurer les paramètres.

Un tel capteur de vibrations est destiné par exemple à mesurer l'accélération dans les barres constituant le stator d'un turbo-alternateur.

Diverses observations ont montré que les barres constituant le stator d'un turbo-alternateur de grande puissance pouvaient accuser, au cours du temps, divers jeux causés par les forces électro-magnétiques de Laplace, associées à des desserrages progressifs des systèmes de maintien.

Ces forces s'expriment mathématiquement par le produit de la longueur L de la barre par le produit vectoriel de l'intensité I que traverse la barre par l'induction magnétique B à laquelle la barre est soumise.

Ces forces engendrent des vibrations à la fréquence double de celle du courant. Si le turbo-alternateur produit un courant à 50 Hz, la fréquence vibratoire est donc de 100 Hz.

Néanmoins, lors des manoeuvres ou changement de régime de la machine, d'autres fréquences vibratoires peuvent apparaître.

Il est utile de pouvoir mesurer en permanence les fréquences et les amplitudes des vibrations subies par les barres d'un turbo-alternateur, de manière à analyser les phénomènes qui surviennent, en faire l'historique, et prévoir des programmes de maintenance.

Compte tenu de ce qui a été énoncé plus haut, il est intéressant de pouvoir disposer d'un capteur de vibrations "large bande", pour obtenir des informations correcte des états de vibrations des divers endroits examinés, et d'effectuer une mesure précise en amplitude, en phase et en fréquence.

La présence de la haute tension sur diverses barres du stator interdit d'y disposer des capteurs conventionnels reliés galvaniquement à leur circuit électronique.

Les fibres optiques sont isolantes, et il est naturel de les mettre en oeuvre pour la réalisation d'un capteur de vibrations utilisé dans des zones où règne une tension électrique élevée.

Un but de la présente invention est donc de réaliser un capteur de vibrations à fibres optiques permettant d'assurer la mesure de l'accélération dans un axe déterminé, avec une grande précision, dans un environnement difficile.

A titre d'exemple un cahier des charges imposé au capteur de vibrations à définir serait le suivant:

Gamme des fréquences mesurées: 10 à 1500 Hz.
Déphasage de la mesure à 100 Hz: < 10 minutes d'angle.
Dynamique de mesure sur chaque fréquence: 0,1g à 100g.
Précision de mesure: 2% en plus ou en moins.
Sensibilité transverse: < 0,1

L'environnement dans lequel le capteur devrait fonctionner selon les exigences précitées serait:

Présence de champs magnétiques de l'ordre du Tesla.
Présence de haute tension de l'ordre de 25 kV.
Pression relative d'hydrogène de l'ordre de 4 bars.

Température de fonctionnement comprise entre +10°C et 120°C avec une variation de température ambiante pouvant atteindre 50°C en 10 minutes.

Enfin, les dimensions du capteur et sa masse ne doivent pas excéder des valeurs incompatibles avec l'application envisagée; dans le cas d'un capteur utilisé pour la détection des vibrations des barres de turbo-alternateur, les dimensions du capteur doivent par exemple être voisines de: 15 x 15 x 30 mm. La masse du capteur de être préférentiellement inférieure à 20 grammes.

Le choix du Demandeur pour la réalisation d'un capteur optique de vibrations, s'est porté sur un capteur mettant en oeuvre la déflexion d'une poutre encastrée (dite aussi poutre cantilever) sous l'effet de la force d'inertie appliquée sur sa propre masse; la mesure de cette déflexion se fait par voie optique, en envoyant un flux lumineux sur une surface réfléchissante solidaire de la poutre vibrante et en mesurant l'intensité optique recueillie après réflexion sur le miroir.

L'état de la technique dans ce domaine est défini par le document EP-B 0 354 882, qui décrit un capteur de vibration comprenant un boîtier dans lequel un élément vibrant est réalisé sous la forme d'une feuille dont une extrémité est fixée au boîtier, l'autre extrémité étant libre et possédant une surface apte à diffuser un faisceau incident provenant d'une fibre optique d'émission. L'extrémité de la fibre d'émission est munie d'une micro lentille permettant de faire converger le faisceau incident vers la partie mobile de l'élément vibrant. Une fibre optique de réception est disposée à proximité de la fibre d'émission, et est aussi munie d'une micro lentille qui possède un axe optique dirigé vers la même partie mobile. Elle transmet à des moyens d'analyse une partie de la lumière diffusée par la partie mobile de l'élément vibrant afin d'en mesurer la fréquence et l'intensité, cette dernière étant proportionnelle à la distance entre la surface diffusante et la fibre de réception.

Une des principales applications de ce capteur est la mesure de vibrations affectant des parties de machines électriques, comme par exemple un stator d'alternateur de grande puissance. Le capteur est particulièrement adapté à la détection d'amplitudes de vibration anormales d'une partie vibrant à une fréquence de résonance qui est déterminée par la fréquence de l'alimentation électrique de la machine. Dans ce cas, il est avantageux que la feuille vibrante du capteur soit conçue de façon à osciller avec une amplitude maximale à la fréquence de résonance de la partie de la machine sur laquelle est fixé le capteur.

Toutefois, ce capteur n'est pas adapté à la mesure de vibrations dans une gamme de fréquences relativement large. En effet, un élément vibrant réalisé sous la forme d'une feuille oscille généralement avec une amplitude relativement faible dès que la vibration que subit le capteur s'écarte de la fréquence de résonance propre à cet élément vibrant. Comme la fibre optique de réception ne recueille qu'une très faible partie de la lumière incidente qui est diffusée par la surface de l'élément vibrant, le signal lumineux analysé ne présente plus de variation significative à l'écart de la plage de résonance propre à cet élément.

Un but de l'invention est de réaliser un capteur optique de vibration différent de l'art antérieur, à la fois robuste et de mise en oeuvre économique, et qui permette la mesure de fréquences dans une gamme relativement large. En outre, les éléments d'un capteur selon l'invention sont agencés pour analyser un signal lumineux significatif en vue d'obtenir une grande précision sur la mesure.

A cet effet, l'invention a pour objet un capteur optique de vibrations pour environnement électrique soumis à une moyenne ou haute tension, comprenant un boîtier étanche rempli d'un gaz isolant et renfermant un élément vibrant dont une première extrémité est immobile dans le boîtier tandis qu'une seconde extrémité peut vibrer librement, une paroi dudit boîtier étant traversée par une première et une seconde fibre optique reliées à des moyens respectivement d'émission et de réception de lumière situés à l'extérieur du boîtier, lesdites fibres possédant chacune une extrémité fixe à l'intérieur du boîtier, la première fibre optique dite fibre d'émission étant prévue pour émettre un faisceau de lumière incidente vers des moyens de renvoi optique ménagés à l'extrémité mobile dudit élément vibrant, la seconde fibre optique dite fibre de réception étant prévue pour récupérer une partie de la lumière émise par lesdits moyens de renvoi et la transmettre à des moyens d'analyse de son intensité, et/ou de sa fréquence et/ou de sa phase, ladite intensité étant proportionnelle à la distance entre lesdits moyens de renvoi et une extrémité de ladite fibre de réception, caractérisé en ce que les axes optiques des extrémités des première et seconde fibres sont parallèles entre eux, lesdites extrémités sont polies, ledit élément vibrant est réalisé sous la forme d'une lame, lesdits moyens de renvoi optique sont réflecteurs, et l'espace compris entre lesdites extrémités et lesdits moyens de renvoi optique est exclusivement constitué dudit gaz isolant.

De préférence, les extrémités des première et seconde fibres présentent des surfaces d'émission et de réception comprises dans un même plan, et les moyens de renvoi optique possèdent une surface plane approximativement parallèle audit plan. Ces extrémités peuvent être dénudées, c'est à dire dépourvues de toute gaine protectrice, pour finir parallèles et jointives sur une certaine longueur, et la distance entre ledit plan et la surface desdits moyens de renvoi optique est de préférence inférieure ou égale à ladite longueur.

Avantageusement, un bloc comprenant des cavités destinées au passage desdites fibres est fixé à l'intérieur du boîtier du capteur, et la lame est réalisée à partir d'une découpe appropriée de ce bloc. Une des cavité débouche en vis à vis de la face dite inférieure de la lame.

De préférence, le bloc est réalisé en un matériau ayant un coefficient de dilatation thermique inférieur à $0,1.10^{-6}$.

Avantageusement, ledit matériau du bloc est une vitrocéramique commercialisée sous la marque "ZERODUR".

Dans un premier mode de réalisation les moyens réfléchissants la lumière comprennent une pièce munie d'un revêtement réfléchissant et collée sur la face supérieure de ladite lame au-dessus d'un trou de cette dernière.

En variante, les moyens réfléchissante la lumière comprennent une pièce munie d'un revêtement réfléchissant et collée sur la face inférieure de ladite lame.

Selon une autre variante, les moyens réfléchissants sont constitués par un dépôt réfléchissant déposé sur la face inférieure de la lame.

Avantageusement, ladite pièce est réalisée dans le même matériau que la lame.

Les moyens pour envoyer le lumière comprennent une première fibre optique, dite fibre d'émission, dont une extrémité dénudée est disposée perpendiculairement à la pièce réfléchissante, à une faible distance de celle-ci.

Les moyens pour recevoir la lumière réfléchie comprennent une seconde fibre optique, dite fibre de réception, dont une extrémité dénudée est disposée perpendiculairement à la pièce réfléchissante, à une faible distance de celle-ci.

Les extrémités dénudées des fibres d'émission et de réception sont disposés côte-à-côte dans un premier conduit capillaire d'un embout cylindrique ayant intérieurement un diamètre sensiblement égal au double du diamètre d'une fibre optique dénudée, ledit embout étant disposé dans une première cavité cylindrique pratiquée dans ledit bloc, perpendiculairement au plan de la lame.

Ledit embout présente un second conduit capillaire, adjacent et coaxial audit premier conduit capillaire, ayant un diamètre sensiblement égal au double du diamètre d'une fibre optique munie de sa gaine.

Ledit embout est immobilisé dans ladite première cavité par collage.

Le bloc comprend une seconde cavité perpendiculaire à la première cavité et communiquant avec cette dernière, ladite seconde cavité débouchant à l'extérieur du bloc et recevant les fibres optiques d'émission et de réception.

Ledit bloc est de forme parallélépipédique.

Ledit bloc est disposé dans un boîtier étanche.

Le boîtier est rempli de gaz isolant, tel que l'azote sec.

Le boîtier est réalisé dans le même matériau que le bloc.

Les fibres optiques d'émission et de réception sont immobilisées dans ladite seconde cavité par une colle.

Les fibres optiques d'émission et de réception traversent de manière étanche une paroi du boîtier par l'intermédiaire d'un manchon réalisé dans le même matériau que le boîtier et collé.

L'invention sera bien comprise à la lecture de la description d'un mode préféré de réalisation, en référence au dessin annexé dans lequel:

- la figure 1 est un schéma illustrant le couplage optique entre deux fibres optiques,
- la figure 2 est un schéma équivalent au schéma de la figure 1,
- la figure 3 est un diagramme illustrant le phénomène de couplage optique entre la fibre d'émission et la fibre de réception,
- la figure 4 est une vue en élévation du bloc constituant la partie principale du capteur optique selon l'invention,
- la figure 5 est une vue de dessus du même bloc,
- la figure 6 est une vue à échelle agrandie d'une partie de la figure 2,
- la figure 7 est une vue à échelle agrandie de la même partie de la figure 2, selon une première variante de réalisation,
- la figure 8 est une vue à échelle agrandie de la même partie de la figure 2, selon une seconde variante de réalisation,
- la figure 9 est une vue en coupe du capteur comprenant le bloc et son boîtier,
- la figure 10 est un diagramme du circuit électronique du capteur.

Avant de décrire un exemple de mise en oeuvre de l'invention, il est bon de rappeler quelques éléments de mécanique et de dynamique.

Si on impose à un objet un déplacement sinusoïdal de la forme:

$$d(t) = d_o.\sin\omega t$$

avec

d: amplitude

$\omega$: pulsation

t: temps

l'objet est soumis à une accélération g qui est la dérivée seconde du déplacement:

$$g(t) = d''(t) = -\omega^2.d(t) = -(\omega^2 d_o).\sin\omega t$$

On note que cette accélération est proportionnelle au déplacement.

Si le mouvement de l'objet est alternatif sans être sinusoïdal, il peut être décomposé en une série de Fourier et représenté par:

$$D(t) = \Sigma\, D_o.\sin(\omega_i t + \phi_i)$$

L'accélération de l'objet peut s'écrire:

$$\Gamma(t) = \Sigma - \omega_i^2\, D_o.\sin(\omega_i t + \phi_i)$$

Les lois classiques de la dynamique enseignent que si un objet de masse m subit une accélération (imposée par un déplacement déterminé), celui-ci est alors soumis à une force d'inertie déterminée par le principe fondamental de la dynamique:

$$F(t) = m.\Gamma(t)$$

Ainsi donc, mesurer le déplacement d'un objet est équivalent à mesurer la force d'inertie qu'il reçoit.

Les lois de la physique du solide enseignent que si un objet, est soumis à une force extérieure (telle que la force d'inertie), cet objet se déforme.

La rigité d'un objet est caractérisé par son module d'élasticité ou module d'Young.

On rappelle que l'allongement $\Delta L$ d'une barre de longueur L et de section a, soumise à une force F, est exprimé par la relation:

$$\Delta L = (F/E) \times (L/a)$$

relation dans laquelle E est le module d'élasticité du matériau de la barre.

Ainsi, mesurer le déplacement d(t) d'un objet est équivalent à mesurer sa déformation.

Un accéléromètre est un système comprenant un objet déformable, sous l'effet de la force d'inertie provoquée par le déplacement, et un dispositif de mesure de cette déformation.

Dans le capteur optique de l'invention, l'élément déformable est une lame encastrée.

On rappelle les caractéristiques de la poutre encastrée ou poutre cantilever.

Si on désigne par:

E le module d'élasticité du matériau de la poutre

ρ la densité du matériau
a l'épaisseur de la la poutre
l la longueur de la poutre
Γ l'accélération communiquée à la poutre,

on établit les relations suivantes

fréquence de résonance : $f = 1/2\pi . (E/r)^{1/2}.a/l^2$
flèche de déformation : $Y_{MAX} = 3\rho l^4/2Ea^2 . \Gamma$
angle de déflexion de la lame: $\theta_{MAX} = 2\rho l^3/Ea^2 . \Gamma$

On note que l'insensibilisation aux vibrations transverses est obtenue facilement en donnant à la poutre une largeur supérieure ou égale à 10 fois la valeur de son épaisseur. La poutre devient une plaque ou lame d'épaisseur a et de largeur b.

Quelques rappels d'optique sont faits maintenant.

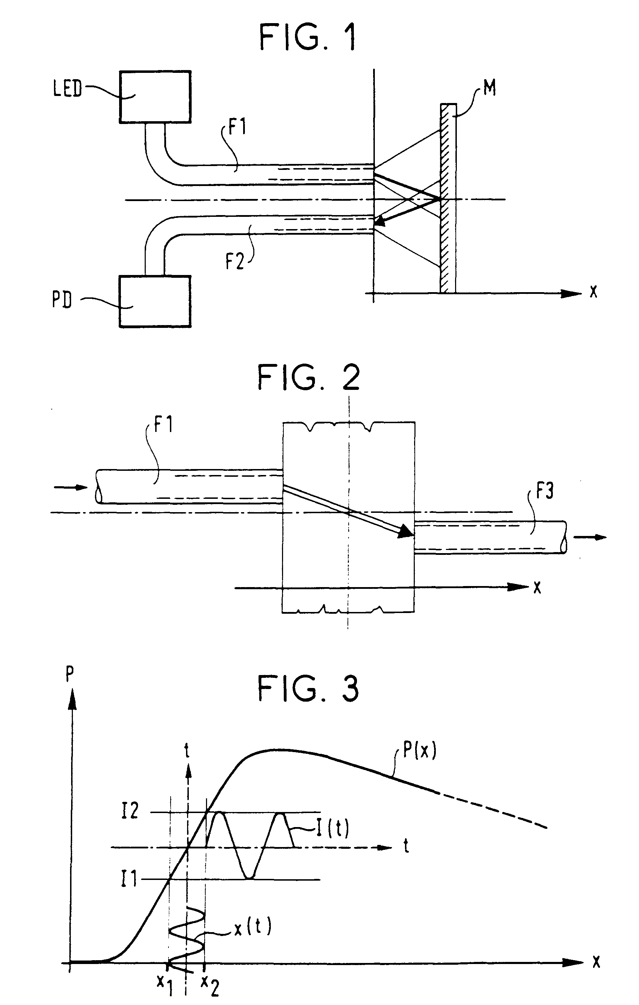

Comme on l'a indiqué plus haut, la mesure des paramètres des vibrations est ramenée à une mesure optique; la lame encastrée du capteur lié à l'objet vibrant est munie d'une surface réfléchissante M (voir Fig. 1) sur lequel est envoyée, par une première fibre F1, une lumière incidente; on recueille sur une fibre F2 la lumière réfléchie par la surface réfléchissante M. L'intensité de la lumière doit être proportionnelle au déplacement du capteur.

On utilise le fait que le déplacement de l'extrémité de la lame encastrée est proportionnel au déplacement du capteur, comme le montre la formule rappelée ci-dessus.

La lumière émise par exemple par une diode électroluminescente LED est injectée dans la fibre F1 qui peut être de diamètre quelconque, monomode ou multimode. L'extrémité de la fibre est polie et maintenue par un embout comme il sera décrit plus loin.

Cet embout porte aussi la seconde fibre, F2, disposée parallèlement à la première fibre. Elle sert de fibre de réception de la lumière réfléchie par la surface réfléchissante. Une photo-diode PD disposée à l'extrémité opposée de la fibre F2 permet de convertir le flux lumineux en un photo-courant, puis en une petite tension électrique qui sera traitée par une carte électronique décrite plus loin.

On remarque que le déplacement de la surface réfléchissante provoque la même modulation lumineuse I(t) de la fibre F1 vers la fibre F2 que le déplacement d'une fibre F3 par rapport à la fibre F1 dans le cas où la fibre F3 est l'image de la fibre F2 dans la surface réfléchissante (Voir Fig.2).

Il est donc aisé de connaître (théoriquement et expérimentalement) la puissance lumineuse P(x) couplée de la fibre F1 à la fibre F2 en éloignant la fibre F3 d'une quantité x que l'on peut faire varier de zéro à l'infini.

La Fig.3 montre les variations de cette puissance lumineuse P en fonction de la distance x séparant les extrémités des fibres F1 et F3; on constate qu'il existe une zone linéaire dans laquelle la puissance lumineuse est proportionnelle à x, donc au déplacement de la surface réfléchissante.

Sous la condition de placer les extrémités des fibres F1 et F2 à une distance de la surface réfléchissante telle qu'elle corresponde à la partie rectiligne de la courbe de la Fig.3, l'intensité lumineuse I(t) recueillie dans la fibre F2 peut s'exprimer par la relation:

$$I(t) = \alpha. I_o(1 + k.d(t))$$

avec:

$\alpha$ : coefficient de transmission lumineux du système optique complet,
k: coefficient de sensibilité de la lame cantilever,
d(t): déplacement du capteur en fonction du temps t.

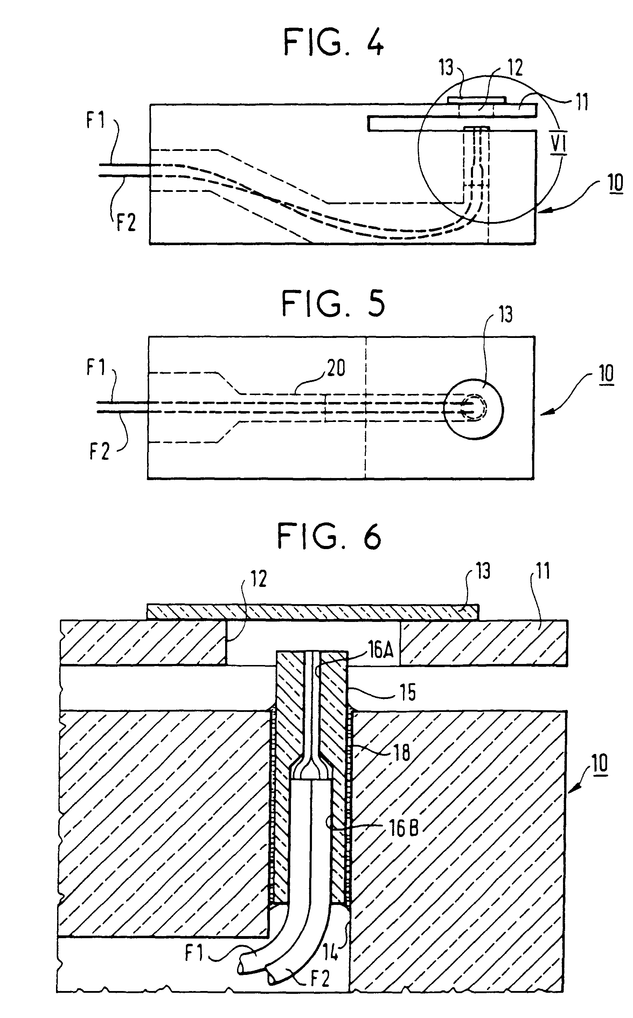

On se référera aux Fig. 4 à 6.

Selon la caractéristique principale de l'invention, un bloc 10, de préférence parallélépipédique, est usiné de manière à définir une lame 11, de faible épaisseur et ayant pour largeur l'une des dimensions du bloc. Pour résister, sans fracture, aux gradients de température précisés plus haut, le matériau du bloc est de préférence une vitrocéramique dont le coefficient de dilatation thermique est compris entre $0,1.10^{-6}$ et $0,01.10^{-6}$. Un tel matériau est commercialisé par la société SCHOTT sous la marque "ZERODUR".

Les dimensions de la lame sont choisies pour répondre aux spécifications précisées plus haut, qui nécessitent une fréquence de résonance supérieure ou égale à 2000 Hz.

On peut choisir par exemple:

- longueur de la lame: 15 mm
- largeur de la lame: 10 mm
- épaisseur de la lame: 0,5 mm

Le choix d'une pièce monolithique évite le collage de la lame comme il est mentionné dans l'état de la technique, qui rend l'appareil fragile; en outre, le ramollissement des colles, au-delà d'une certaine température, par exemple 100°C, entraîne des variations de la sensibilité et de la fréquence de résonance de la lame. La solution de l'invention, dans laquelle la lame fait partie intégrante du bloc, permet d'échapper à ces inconvénients.

Il faudrait considérer comme faisant partie de l'invention, un bloc associé à une lame, dans lequel la lame serait solidarisée au bloc de manière irréversible, par un procédé mécanique, par exemple en appliquant l'une contre l'autre avec une très forte pression et sans aucune colle, des surfaces parfaitement polies de la lame et du bloc, de manière analogue à ce qui est fait pour solidariser deux pièces métalliques.

Dans un mode préféré de réalisation, représenté dans les Fig. 4 à 6, la surface réfléchissante est constitué par un miroir 13 collé au droit d'u trou pratiqué dans la lame 11. Ce miroir est avantageusement une mince pastille usinée dans le même matériau que le bloc (préférentiellement du ZERODUR) et ayant subi sur une face un traitement réfléchissant. La pastille 13 est d'un diamètre supérieur à celui du trou 12 et est collée sur la lame 11.

Le miroir est de faible masse pour ne pas alourdir la lame encastrée 11. Par exemple, le miroir a un diamètre de 3mm et une épaisseur de 250 μm.

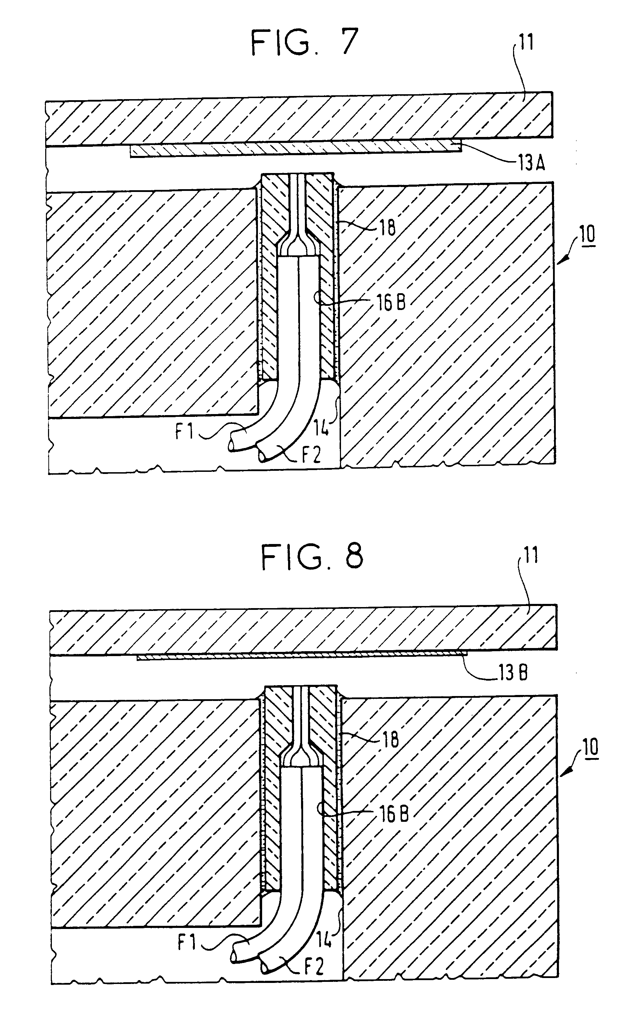

Dans une première variante de réalisation, représentée dans la Fig. 7, le miroir, référencé 13A, est collé à la partie inférieure de la lame 11; le trou 12 est alors supprimé.

Dans une seconde variante de réalisation, représentée dans la Fig. 8, le miroir 11 est remplacé par un polissage et un traitement réfléchissant 13B pratiqué sur la face inférieure de la lame 11; le trou de la lame est alors également supprimé.

On revient aux Fig. 4 à 6. Les considérations ci-après s'appliquent également, mutatis mutandis, aux variantes des Fig. 7 et 8.

Une cavité cylindrique 14 est percée dans le bloc 10, perpendiculairement à la lame 11 et de même axe que le miroir 13. Cette cavité est destinée à recevoir un embout 15 contenant les extrémités des fibres optiques F1 et F2. L'embout 15 comprend deux canaux axiaux capillaires consécutifs 16A et 16B; le canal 16A, dont le diamètre est de l'ordre de 250μm, contient les fibres F1 et F2 dénudées (c'est-à-dire sans leur gaine plastique) et disposées côte à côte; le canal 16B, de diamètre supérieur à celui du canal 16A, par exemple 800 μm) reçoit les deux fibres optiques avec leur gaine. Les fibres dénudées affleurent à l'extrémité de l'embout et sont polies pour assurer le couplage optique décrit plus haut. Un traitement antireflet peut être prévu pour limiter le taux de lumière parasite réfléchi.

La distance entre le miroir et l'extrémité de l'embout est ajusté pour que le couplage optique des fibres se fasse dans la zone rectiligne de la courbe de la Fig. 3. Cette ajustement étant effectué, l'embout 15 est immobilisé dans la cavité 14 à l'aide d'une colle 18.

L'embout doit avoir un coefficient de dilatation thermique le plus faible possible pour répondre aux exigences du cahier des charges. Comme il est difficile, dans l'état actuel de la technologie, de construire des embouts capillaires en ZERODUR, on choisira un embout en silice, malgré son coefficient de dilatation cinq fois plus élevé que celui du ZERODUR. Compte tenu du faible diamètre de l'embout (de l'ordre de 1,6 mm) la dilatation différentielle entre l'embout et le bloc sera faible et compensée par un léger jeu entre l'embout 15 et la cavité 14, jeu qui ne nuira pas au collage de l'embout.

Le bloc 10 comprend une seconde cavité cylindrique 20, sensiblement perpendiculaire à la première cavité 14 et débouchant dans celle-ci, s'étendant parallèlement à des grandes faces du bloc parallélépipédique, et débouchant sur une petite face. Cette cavité sert de guide aux fibres F1 et F2 qui sortent du bloc par la petite face précitée. A l'intérieur de la cavité 20, les fibres F1 et F2 sont immobilisées par une colle.

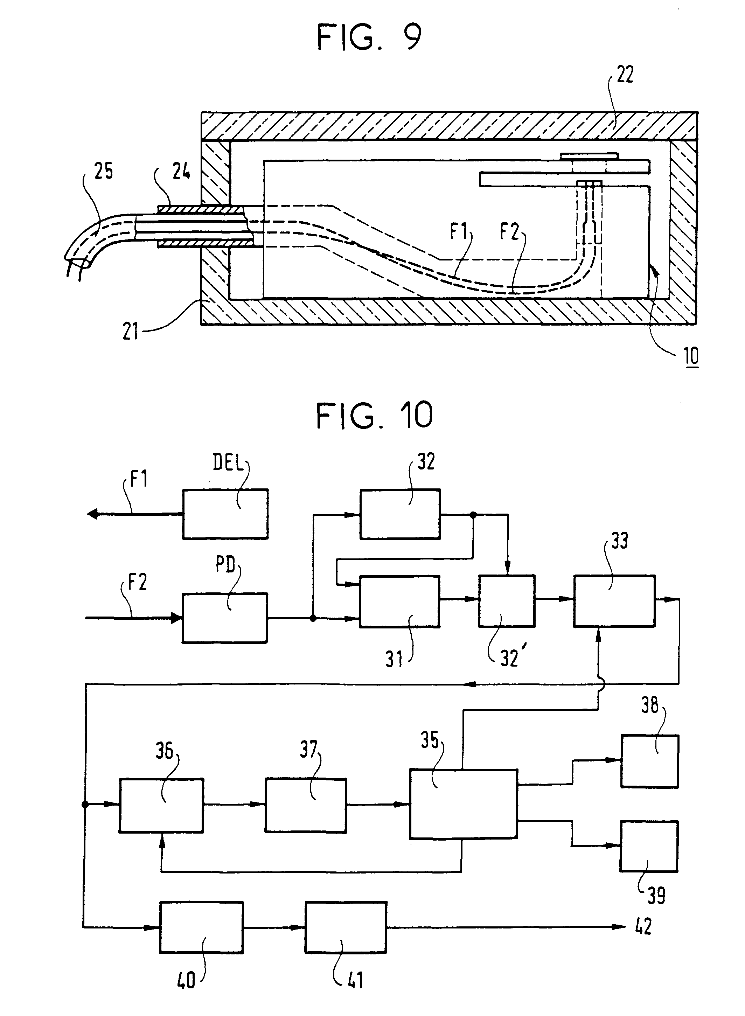

Comme le montre la Fig.9, le bloc 10 est contenu dans un boîtier étanche 21, de préférence réalisé à partir d'un bloc de ZERODUR évidé pour recevoir le bloc 10 et muni d'un couvercle 22, réalisé dans le même matériau, et collé pour fermer de manière étanche le boîtier 21.

A l'intérieur du boîtier règne une ambiance de gaz neutre, par exemple de l'azote sec.

Le bloc est de préférence fixé à l'intérieur du boîtier par collage, à l'aide d'une colle ayant la propriété de bien transmettre les vibrations pour ne pas fausser la mesure. Un exemple d'une telle colle est celle référencée X6O par la société HBM. Sa particularité est de devenir, après séchage, d'une dureté comparable à celle de la céramique et de résister à la température.

Un embout 24 en ZERODUR permet de réaliser la traversée étanche des fibres optiques; l'embout est collé à la paroi du boîtier; les fibres sont maintenues dans l'embout par une colle qui assure également l'étanchéité de la traversée. Les fibres F1 et F2 sont disposées en sortie du boîtier dans une gaine en plastique 25 dont la composition permet de résister à l'hydrogène qui existe dans l'environnement des barres de sortie de turbo-alternateurs.

La Fig. 10 est un schéma synoptique électronique du capteur.

Le signal issu de la photodiode de réception PD est adressé à un amplificateur opérationnel 31 muni d'un filtre passe-bas 32; en sortie de l'amplificateur, le signal est envoyé à un diviseur 32', puis à un circuit correcteur de sensibilité 33 piloté par un microprocesseur 35. Le signal est filtré par un filtre sélectif de fréquence 36 commandé par le microprocesseur, puis numérisé par un convertisseur 37 avant d'être adressé au microprocesseur. Ce dernier calcule l'amplitude de la vibration et fournit la valeur efficace sur une sortie numérique 38 et sur un afficheur 39. Le signal est également fourni sous forme analogique sur une sortie 42 après réglage de phase et correction d'offset (circuit 40) et filtrage (circuit 41).

Le capteur de l'invention s'applique particulièrement bien à la mesure des vibrations des barres de sortie de turbo-alternateurs, en raison du fait que sa conception lui permet de résister aux difficiles conditions d'exploitation.

L'utilisation de deux fibres optiques distinctes pour l'émission et la réception permet de s'affranchir de la longueur de fibre utilisée et des réflexions parasites pouvant intervenir lorsqu'on utilise une seule fibre associée à un organe fluorescent, la fibre devant alors être munie d'organes de focalisation, de couplage et/ou de dérivation.

Dans le capteur de l'invention, on n'utilise aucune lentille de focalisation qui pose des problèmes de collage dans l'environnement et complique le capteur par la nécessité de prévoir un miroir de renvoi..

## Revendications

1. Capteur optique de vibrations pour environnement électrique soumis à une moyenne ou haute tension, comprenant un boîtier (21) étanche rempli d'un gaz isolant et renfermant un élément vibrant dont une première extrémité est immobile dans le boîtier tandis qu'une seconde extrémité peut vibrer librement, une paroi dudit boîtier étant traversée par une première (F1) et une seconde (F2) fibre optique reliées à des moyens respectivement d'émission (LED) et de réception (PD) de lumière situés à l'extérieur du boîtier, lesdites fibres (F1, F2) possédant chacune une extrémité fixe à l'intérieur du boîtier (21), la première fibre optique (F1) dite fibre d'émission étant prévue pour émettre un faisceau de lumière incidente vers des moyens de renvoi optique ménagés à l'extrémité mobile dudit élément vibrant, la seconde fibre optique (F2) dite fibre de réception étant prévue pour récupérer une partie de la lumière émise par lesdits moyens de renvoi et la transmettre à des moyens d'analyse de son intensité, et/ou de sa fréquence et/ou de sa phase, ladite intensité étant proportionnelle à la distance entre lesdits moyens de renvoi et une extrémité de ladite fibre de réception, **caractérisé en ce que** les axes optiques des extrémités des première et seconde fibres (F1, F2) sont parallèles entre eux, lesdites extrémités sont polies, ledit élément vibrant est réalisé sous la forme d'une lame (11), lesdits moyens de renvoi optique sont réflecteurs, et l'espace compris entre lesdites extrémités et lesdits moyens de renvoi optique est exclusivement constitué dudit gaz isolant.

2. Capteur selon la revendication 1, dans lequel lesdites extrémités des première et seconde fibres (F1, F2) présentent des surfaces d'émission et de réception comprises dans un même plan, et dans lequel les moyens de renvoi optique (13, 13A, 13B) possèdent une surface plane approximativement parallèle audit plan.

3. Capteur selon la revendication 2, dans lequel lesdites extrémités sont dénudées pour finir parallèles et jointives sur une certaine longueur, et dans lequel la distance entre ledit plan et la surface desdits moyens de renvoi optique est inférieure ou égale à ladite longueur.

4. Capteur selon l'une des revendications 1 à 3, dans lequel un bloc (10) comprenant des cavités (20, 14) destinées au passage desdites fibres (F1, F2) est fixé à l'intérieur dudit boîtier (21), et dans lequel ladite lame (11) est réalisée à partir d'une découpe appropriée dudit bloc (10), une cavité (14) débouchant en vis à vis de la face dite inférieure de la lame.

5. Capteur selon la revendication 4, dans lequel lesdits moyens de renvoi optique comprennent une pièce (13) munie d'un revêtement réfléchissant et collée sur la face dite supérieure de ladite lame (11) au-dessus d'un trou (12) ménagé dans cette dernière.

6. Capteur optique selon la revendication 5, dans lequel ladite pièce (13) est réalisée dans le même matériau que ladite lame (11).

7. Capteur optique selon la revendication 4, dans lequel lesdits moyens de renvoi optique comprennent une pièce (13A) munie d'un revêtement réfléchissant et collée sur la face inférieure de ladite lame (11), ou sont constitués par un dépôt réfléchissant (13B) déposé sur cette face inférieure.

8. Capteur optique selon la revendication 3 et l'une des revendications 4 à 7, dans lequel les extrémités dénudées des fibres d'émission (F1) et de réception (F2) sont disposées dans un premier conduit capillaire (16A) d'un embout cylindrique (15), ledit embout étant introduit dans une première cavité cylindrique (14) pratiquée dans ledit bloc (10).

9. Capteur optique selon la revendication 8, dans lequel ledit embout (15) présente un second conduit capillaire (16B), adjacent et coaxial audit premier conduit capillaire (16A) et ayant un diamètre sensiblement égal au double du diamètre d'une fibre (F1, F2) munie de sa gaine.

10. Capteur optique selon l'une des revendications 4 à 9, dans lequel ledit boîtier (21) ainsi qu'un manchon (24) pour la traversée étanche des fibres (F1, F2) sont réalisés dans le même matériau que ledit bloc (10).

## Claims

1. An optical vibration sensor for electrical environments subjected to a medium voltage or a high voltage, including a sealing casing (21) filled with an insulative gas and enclosing a vibrating member which has a first end that is immobile in the casing and a second end that can vibrate freely, and a first optical fibre (F1) and a second optical fibre (F2) passing through a wall of said casing and respectively connected to light emitting means (LED) and light receiving means (PD) outside the casing, in which sensor said fibres (F1, F2) each have one end fixed to the interior of the casing (21), the first optical fibre (F1), referred to as the emitter fibre, is adapted to emit a beam of incident light towards optical reflecting means at the mobile end of said vibrating member, the second optical fibre (F2), referred to as the receiver fibre, is adapted to recover some of the light emitted by said reflecting means and to transmit it to means for analysing its intensity and/or its frequency and/or its phase, said intensity being proportional to the distance between said reflecting means and one end of said receiver fibre, which sensor is **characterized in that** the optical axes of the ends of the first and second fibres (F1, F2) are parallel, said ends are polished, said vibrating member takes the form of a blade (11), said optical reflecting means are reflectors, and the space between said ends and said optical reflecting means contains only said insulative gas.

2. A sensor according to claim 1, wherein said ends of the first and second fibres (F1, F2) have emitter and receiver surfaces in a common plane and the optical reflecting means (13, 13A, 13B) have a plane surface approximately parallel to said plane.

3. A sensor according to claim 2, wherein said ends are stripped to finish parallel and contiguous over a certain length, and wherein the distance between said plane and the surface of said optical reflecting means is less than or equal to said length.

4. A sensor according to any of claims 1 to 3, wherein a block (10) including cavities (20, 14) for said fibres (F1, F2) to pass through is fixed to the interior of said casing (21) and said blade (11) is made by cutting said block (10) appropriately, with a cavity (14) opening opposite the lower face of the blade.

5. A sensor according to claim 4, wherein said optical reflecting means have one portion (13) provided with a reflective coating and glued to the upper face of said blade (11) above a hole (12) formed therein.

6. A sensor according to claim 5, wherein said portion (13) is made from the same material as said blade (11).

7. A sensor according to claim 4, wherein said optical reflecting means have one portion (13A) provided with a reflective coating and glued to the lower face of said blade (11) or consist of a reflective deposit (13B) on said lower face.

8. An optical sensor according to claim 3 and any of claims 4 to 7, wherein the stripped ends of the emitter fibre (F1) and receiver fibre (F2) are disposed in a first capillary passage (16A) of a cylindrical ferrule (15) inserted into a first cylindrical cavity (14) in said block (10).

9. An optical sensor according to claim 8, wherein said ferrule (15) has a second capillary passage (16B) adjacent and coaxial with said first capillary passage (16A) and having a diameter substantially equal to twice the diameter of an optical fibre (F1, F2) including its cladding.

10. An optical sensor according to any of claims 4 to 9, wherein said casing (21) and a sleeve (24) through which the fibres (F1, F2) pass in a sealed manner are made from the same material as said block (10).

**Patentansprüche**

1. Optischer Schwingungsaufnehmer für eine elektrische Umgebung, die einer mittleren oder Hochspannung unterworfen ist, aufweisend ein dichtes Gehäuse (21), das mit einem Isoliergas gefüllt ist und ein Schwingungselement enthält, von dem ein erstes Ende in dem Gehäuse unbeweglich ist, während ein zweites Ende frei schwingen kann, wobei eine Wand des Gehäuses durch eine erste (F1) und eine zweite (F2) Lichtleitfaser durchquert ist, die jeweils mit Mitteln (LED) zum Senden und Mitteln (PD) zum Empfangen von Licht verbunden sind, die außerhalb des Gehäuses gelegen sind, wobei die Lichtleitfasern (F1, F2) jeweils ein festes Ende im Inneren des Gehäuses (21) besitzen, wobei die erste Lichtleitfaser (F1), Sendefaser genannt, vorgesehen ist, um einen einfallenden Lichtstrahl in Richtung auf optische Rückstrahlmittel zu senden, die am beweglichen Ende des Schwingungselements vorgesehen sind, wobei die zweite Lichtleitfaser (F2), Empfangsfaser genannt, vorgesehen ist, um einen Teil des Lichts zurückzugewinnen, das durch die Rückstrahlmittel ausgesandt wird, und den Teil des Lichts an Mittel zur Analyse seiner Intensität und/oder seiner Frequenz und/oder seiner Phase zu übertragen, wobei die Intensität proportional zum Abstand zwischen den Rückstrahlmitteln und einem Ende der Empfangsfaser ist,
**dadurch gekennzeichnet, dass** die optischen Achsen der Enden der ersten Faser (F1) und der zweiten Faser (F2) zueinander parallel sind, die Enden glatt sind, das Schwingungselement in Form einer Platte (11) ausgeführt ist, die optischen Rückstrahlmittel Reflektoren sind und der Raum zwischen den Enden und den optischen Rückstrahlmitteln ausschließlich aus dem Isoliergas gebildet ist.

2. Optischer Schwingungsaufnehmer nach Anspruch 1,
in dem die Enden der ersten (F1) und zweiten (F2) Faser Sende- und Empfangsflächen aufweisen, die in ein und derselben Ebene enthalten sind und in welchem optischen Schwingungsaufnehmer die optischen Rückstrahlmittel (13, 13A, 13B) eine ebene Oberfläche besitzen, die annähernd parallel zu der Ebene ist.

3. Optischer Schwingungsaufnehmer nach Anspruch 2,
in dem die Enden blank sind, um an einer bestimmten Länge parallel und aneinanderstoßend abzuschließen und in welchem optischen Schwingungsaufnehmer der Abstand zwischen der Ebene und der Oberfläche der optischen Rückstrahlmittel kleiner oder gleich der Länge ist.

4. Optischer Schwingungsaufnehmer nach einem der Ansprüche 1 bis 3,
in dem ein Block (10), der Austiefungen (20, 14) aufweist, die für den Durchlauf der Fasern (F1, F2) bestimmt sind, im Inneren des Gehäuses (21) befestigt ist und in welchem optischen Schwingungsaufnehmer die Platte (11) ausgehend von einem geeigneten Ausschnitt des Blocks (10) ausgeführt ist, wobei eine Austiefung (14) gegenüber der sogenannten tiefstehenden Fläche der Platte mündet.

5. Optischer Schwingungsaufnehmer nach Anspruch 4,
in dem die optischen Rückstrahlmittel ein Teil (13) aufweisen, das mit einem reflektierenden Überzug versehen ist und an die sogenannte höherstehende Fläche der Platte (11) über einem Loch (12) geklebt ist, das in dieser Letztgenannten vorgesehen ist.

6. Optischer Schwingungsaufnehmer nach Anspruch 5,
in dem das Teil (13) in demselben Material wie die Platte (11) ausgeführt ist.

7. Optischer Schwingungsaufnehmer nach Anspruch 4,
in dem die optischen Rückstrahlmittel ein Teil (13A) aufweisen, das mit einem reflektierenden Überzug versehen ist und an die tiefstehende Fläche der Platte (11) geklebt ist oder durch eine reflektierende Abscheidung (13B) gebildet sind, die an dieser tiefstehenden Fläche niedergeschlagen ist.

8. Optischer Schwingungsaufnehmer nach Anspruch 3 und einem der Ansprüche 4 bis 7,
in dem die blanken Enden der Sendefaser (F1) und der Empfangsfaser (F2) in einer ersten kapillaren Leitung (16A) eines zylindrischen Ansatzstücks (15) angeordnet sind, wobei das Ansatzstück in eine erste zylindrische Austiefung (14) eingeführt ist, die in dem Block (10) vorgesehen ist.

9. Optischer Schwingungsaufnehmer nach Anspruch 8,
in dem das Ansatzstück (15) eine zweite kapillare Leitung (16B) aufweist, die zur ersten kapillaren Leitung (16A) zugekehrt und koaxial ist und einen Durchmesser von im wesentlichen gleich dem Doppelten des Durchmessers einer Faser (Fl. F2) hat. die mit ihrer Umhüllung versehen ist.

10. Optischer Schwingungsaufnehmer nach einem der Ansprüche 4
bis 9, in dem das Gehäuse (21) sowie eine Hülse (24) für die dichte Durchführung der Fasern (F1, F2) in demselben Material wie der Block (10) ausgeführt sind.

# FIG. 1

# FIG. 2

# FIG. 3

## FIG. 4

## FIG. 5

## FIG. 6

EP 0 791 812 B1

FIG. 7

FIG. 8

12

# FIG. 9

# FIG. 10